# FASCICULE DE BREVET EUROPEEN

(11) **EP 1 921 191 B1**
(45) Date de publication et mention de la délivrance du brevet: **01.08.2012**
(21) Numéro de dépôt: 07119975.6
(22) Date de dépôt: 05.11.2007
(51) Int. Cl.: D04H 1/00, E04B 1/76

(54) **Matériau non-tissé pour isolation thermique à base de fibres organiques et de particules de polymère expansé**
Vliesstoff zur Wärmeisolation aus organischen Fasern und Polymerschaumpartikeln
Non-woven material for thermal insulation based on organic fibres and particles of expanded polymer

(30) Priorité: 07.11.2006 FR 0609720
(43) Date de publication de la demande: 14.05.2008
(73) Titulaire: Electricité de France, 75008 Paris (FR)
(72) Inventeur: YRIEIX, Bernard, 77250, MORET SUR LOING (FR)
(74) Mandataire: Cabinet Plasseraud

(56) Documents cités:
- WO-A-00/69988
- DE-A1- 4 402 912
- DE-A1- 4 415 406
- DE-A1- 19 509 458
- US-A- 4 523 343

## Description

L'invention concerne un nouveau produit d'isolation thermique comprenant, en tant que composant principal et majoritaire, un matériau non-tissé à base de fibres organiques et de particules de polymère expansé.

Les laines minérales dominent très largement le marché des produits d'isolation thermique utilisés en construction et en particulier pour l'isolation des combles. Pour des raisons de gain de place, l'isolant y est le plus souvent placé entre les chevrons. Les défauts de parallélisme, les variations d'écartement et les irrégularités locales compliquent en effet la pose de panneaux rigides, tels que les panneaux en polystyrène expansé (PSE), qui nécessitent une découpe précise ou bien, à défaut d'une telle découpe précise, laissent des zones importantes sans isolation thermique. Il en résulte une médiocre étanchéité à l'air de l'ensemble et des performances globales amoindries.

La mise en oeuvre de laine minérale dans les zones irrégulières des charpentes, notamment sous forme de rouleaux et/ou de matériau en vrac, est ainsi relativement plus aisée que celle de panneaux rigides de matériaux alvéolaires, mais elle est toujours réputée désagréable malgré des progrès récents.

Une approche pour résoudre ces problèmes a été d'associer, dans un même produit d'isolation thermique, à la fois des zones rigides, permettant une pose facile, et des zones très souples garantissant une bonne adaptation aux variations géométrique. La demande de brevet US 2002/0144480 décrit ainsi différents panneaux de construction, également utilisables en tant que panneaux d'isolation thermique, constitués d'au moins deux zones, l'une de ces zones, de préférence en périphérie du panneau, ayant une résistance à la compression inférieure à l'autre. Ces panneaux sont constitués de mousses polymères, de préférence exemptes de matériaux fibreux. Les structures proposées sont toutefois relativement complexes et ne s'adaptent qu'à de faibles variations géométriques des espaces à remplir.

Il existe donc toujours un besoin de produits d'isolation thermique de structure simple, alliant une facilité de pose à une grande souplesse permettant de compenser d'éventuelles variations locales de la géométrie des zones à isoler. Un tel produit doit bien évidemment avoir des performances d'isolation thermique équivalentes à celles des laines de verres et/ou des panneaux de matériaux en polymères expansés. La conductivité thermique de la grande majorité des laines minérales utilisées pour l'isolation des toitures est de l'ordre de 40 mW/m.K. Celle des meilleurs produits est d'environ 32 mW/m.K, mais il s'agit de matériaux significativement plus rigides. La conductivité thermique des plastiques alvéolaires rigides, est typiquement de 38 mW/mK, les meilleurs (mousses en polyuréthanne) atteignant une conductivité thermique de 24 mW/m.K.

Un matériau souple ayant une conductivité thermique de l'ordre de 40 mW/m.K serait par conséquent un bon candidat pour le remplacement des laines minérales dans l'isolation thermique des toitures et combles.

Dans le cadre de ses recherches de matériaux d'isolation thermique toujours plus performants, la Demanderesse a ainsi mis au point un nouveau matériau textile pour isolation thermique, se présentant par exemple en forme de bandes ou de matelas souples, de préférence exempts de fibres minérales, et qui, grâce à sa faible conductivité thermique, sa grande souplesse, son aptitude au découpage et son faible coût convient parfaitement pour l'isolation thermique des toitures de bâtiments.

L'invention a ainsi pour objet un matériau textile non-tissé d'une épaisseur au moins égale à 40 mm, comprenant un assemblage de 75 à 15 parties en poids de fibres organiques (composant (A)) et de 25 à 85 parties en poids de particules individualisées d'un matériau polymère alvéolaire (composant (B)), la somme des composants (A) et (B) étant égale à 100 parties en poids.

L'invention a en outre pour objet un produit d'isolation thermique comprenant au moins un tel matériau non-tissé, ainsi que l'utilisation d'un tel produit pour l'isolation thermique de bâtiments, de préférences de toitures.

Les matériaux de la présente invention, essentiellement à base de polymères expansés et de fibres organiques, doivent être distingués de produits alvéolaires moulés, renforcés par des fibres, dans lesquels les billes de polymère, suite à l'étape de moulage-expansion, sont collées les unes aux autres et forment un matériau continu, essentiellement exempt d'espaces interstitiels entre les billes, et ayant une porosité essentiellement due à la dilatation de l'agent d'expansion.

Dans les matériaux de la présente invention, les particules de matériau alvéolaire sont des particules individualisées, de forme sphérique ou irrégulière, fixées les unes aux autres et/ou sur les fibres organiques, mais qui conservent essentiellement la forme qu'elles avaient avant l'incorporation dans le non tissé selon l'invention. Les matériaux isolants de l'invention ne sont donc pas des produits moulés, fabriqués par moulage-expansion, mais des textiles non-tissés, fabriqués par assemblage et liage de fibres organiques et de particules polymères alvéolaires préformées, autrement dit de particules constituées d'un matériau alvéolaire ayant subi une étape d'expansion avant l'assemblage avec les fibres organiques.

On peut utiliser pour la fabrication des matériaux non tissés de la présente invention une grande variété de fibres organiques, choisies parmi les fibres naturelles, artificielles et synthétiques. On utilisera de préférence des fibres organiques naturelles ou synthétiques, ces dernières étant particulièrement préférées en raison de leur faible coût.

On peut citer à titre d'exemples de polymères utilisables pour la fabrication des fibres synthétiques les polyesters, polyamides, polymères acryliques, polyuréthannes, poly(alcool vinylique), polyoléfines, polymères phénoliques, polymères vinyliques halogénés, l'aramide, le poly(aryléthercétone), le poly(benzimidazole), le poly(éther imide), le poly(sulfure de phénylène) et les mélanges de ceux-ci.

Bien que les fibres naturelles soient généralement d'un coût supérieur à celui des fibres synthétiques, leur utilisation peut s'avérer intéressante à plus long terme dans le cadre d'une politique de développement durable. Les fibres naturelles sont choisies par exemple parmi le coton, le lin, le jute, le chanvre, la soie, la laine et les poils d'animaux.

Les fibres organiques sont de préférence des fibres relativement courtes ayant une longueur comprise entre 4 mm et 100 mm, en particulier entre 10 et 40 mm. Elles peuvent avoir une section circulaire ou une section de forme irrégulière. Leur finesse est de préférence comprise entre 0,0025 décitex et 4,5 décitex (1 décitex = 0,1 g/1000 m), en particulier entre 0,1 décitex et 1 décitex. Pour des fibres à section circulaire, qui ne représentent toutefois qu'un mode de réalisation particulier, cette gamme de finesse correspond à peu près à un diamètre de fibres compris entre 0,5 µm et 20 µm, de préférence compris entre 3 µm et 10 µm.

Bien entendu, on peut utiliser pour la fabrication des matériaux non-tissés de la présente invention un mélange de plusieurs types de fibres différents par leur nature, longueur et/ou finesse.

Les particules de matériau polymère alvéolaire utilisées pour former les matelas non-tissés de la présente invention peuvent être des billes sensiblement sphériques ou bien des particules de forme irrégulière. Les billes de forme sensiblement sphérique sont obtenues de manière connue par polymérisation en émulsion ou en suspension en présence d'un agent d'expansion, suivie d'une étape d'expansion par chauffage. Comme indiqué ci-avant, cette étape d'expansion a lieu avant incorporation des particules dans le matériau non tissé.

Des particules de forme irrégulière peuvent être préparées par broyage ou découpage d'une mousse synthétique, moulée, extrudée ou expansée de n'importe quelle autre manière. Les polymères formant la mousse sont des polymères synthétiques connus, choisis pour leur faible coût. On peut citer par exemple les homopolymères et copolymères de polystyrène, les polyuréthannes et les polyoléfines.

On utilisera de préférence des particules de forme irrégulière obtenues par broyage ou découpage de mousses synthétiques. En effet, de telles mousses, par exemple à base de polystyrène ou de polyuréthanne, sont disponibles en très grande quantité sous forme de déchets d'emballage à recycler. Or, le recyclage de ces mousses par fusion et réutilisation en tant qu'éléments d'emballage aboutit à des produits médiocres en termes de propriétés d'amortissement et donc difficilement utilisables en tant qu'emballages. L'utilisation de ces mousses sous forme broyée dans les matériaux d'isolation thermique de la présente invention, comme alternative au retraitement par fusion, constitue donc une voie de recyclage très intéressante.

La porosité des particules peut être de type ouvert, avec des cellules en communication les unes avec les autres, ou bien de type fermé, avec des alvéoles individualisées qui ne communiquent pas entre elles. Les deux types de porosités peuvent bien entendu coexister au sein d'une même particule. Ainsi, les particules obtenues par broyage ou découpage peuvent comporter des alvéoles ouvertes en surface de la particule et des alvéoles fermées au coeur de celles-ci.

On utilisera de préférence des matériaux alvéolaires comportant une fraction majoritaire d'alvéoles fermées.

Les particules de matériau polymère alvéolaire ont de préférence un diamètre équivalent moyen (diamètre équivalent = diamètre du cercle possédant la même surface que la surface projetée de la particule orientée aléatoirement), déterminé par analyse d'images optiques, compris entre 0,5 et 8 mm, en particulier entre 1 et 6 mm et idéalement entre 1,5 et 3 mm.

La masse volumique apparente des particules de matériau polymère alvéolaire est de préférence inférieure à 50 kg/m³, en particulier comprise entre 10 et 35 kg/m³.

Le matériau thermoisolant de la présente invention ressemble à un textile non-tissé dans lequel sont dispersées les particules de mousse polymère. Une telle structure peut être obtenue par exemple par un procédé appelé procédé « air-laid » qui comprend la mise en suspension, dans un flux d'air, des fibres et particules qui sont ensuite aspirées et déposées en nappe sur un convoyeur en mouvement.

Après formation des nappes de fibres/particules, celles-ci sont ensuite généralement soumises à une étape de
- liage mécanique, par exemple par aiguilletage ou hydroliage,
- liage chimique par application d'un liant approprié qui sera ensuite éventuellement soumis à une étape de polymérisation et/ou de réticulation. Le liant peut être déposé en une quantité allant de 5 à 60 % en masse rapporté à la masse de la nappe de fibres, ou
- liage thermique : les nappes de fibres et de particules sont soumises à un chauffage jusqu'à une température supérieure au point de ramollissement ou au point de fusion d'un de leurs composants. Ce chauffage peut se faire par exemple par calandrage entre deux cylindres chauffés ou encore dans un four à air chaud ;
ou une combinaison de ceux-ci.

Bien entendu, les procédés de formation de nappes et de liage connus doivent être adaptés aux fortes épaisseurs des produits textiles de la présente invention.

Le matériau textile non tissé de la présente invention a de préférence une épaisseur comprise entre 40 et 120 mm, en particulier une épaisseur comprise entre 50 et 100 mm. Il a une masse volumique comprise entre 5 et 35 kg/m³, en particulier entre 10 et 25 kg/m³.

La répartition des fibres et particules à l'intérieur du matelas non-tissé peut être régulière ou bien irrégulière. Autrement dit les proportions respectives des fibres et particules peuvent varier entre la surface et les zones en profondeur du matériau. Il peut ainsi être avantageux de disposer de matériaux présentant une fraction de fibres relativement plus importante en surface.

Pour satisfaire à des exigences particulières, le matériau peut contenir divers additifs tels que des agents ignifugeants, antifongiques, bactéricides, ou des charges destinées à conférer aux matériaux des propriétés hydriques ou radiatives particulières.

Le produit d'isolation thermique de la présente invention peut comporter un ou plusieurs matelas, constitué(s) chacun d'un ou plusieurs matériaux non-tissés, identiques ou différents, tels que décrits ci-dessus.

Il peut être enfermé dans un sachet ou sac constitué par exemple d'un film plastique, d'un film composite, ou d'un voile tissé, tricoté ou non-tissé.

Le tableau ci-après montre la conductivité thermique de différents matériaux non-tissés selon l'invention contenant des fibres de poly(éthylène téréphtalate) ou de polyester, associées à des billes sphériques ou particules broyées de polystyrène expansé. L'ensemble des matériaux du tableau ont été fabriqués par voie air-laid en une épaisseur de 40 mm.

| Fibres | | Particules de PSE¹ | | Matériau composite selon l'invention | | |
|---|---|---|---|---|---|---|
| Nature | Diamètre équivalent (µm) | Nature/diamètre équivalent (mm) | Masse volumique apparente (kg/m³) | Proportion massique particules/fibres | Masse volumique (kg/m³) | Conductivité thermique (mW/m.K) |
| PET² | 25 | Billes / 2 | 13,1 | 25/75 | 11,7 | 45,5 |
| PET | 25 | Billes / 2 | 13,1 | 50/50 | 13,9 | 42 |
| PET | 25 | Billes / 2 | 13,1 | 75/25 | 15,5 | 40 |
| PET | 25 | Particules broyées/ 3 | 20,5 | 25/75 | 18 | 49 |
| PET | 25 | Particules broyées / 3 | 20,5 | 50/50 | 13 | 45 |
| PET | 25 | Particules broyées / 3 | 20,5 | 75/25 | 15,5 | 43 |
| polyester | 5-10 | Billes/1,75 | 15,7 | 25/75 | 16 | 37 |
| polyester | 5-10 | Billes/1,75 | 15,7 | 50/50 | 19 | 35,5 |
| polyester | 5-10 | Billes/1,75 | 15,7 | 75/25 | 22 | 35 |
| polyester | 5-10 | Particules broyées /1,9 | 28,5 | 25/75 | 15,8 | 38,7 |
| polyester | 5-10 | Particules broyées /1,9 | 28,5 | 50/50 | 18,8 | 37,2 |
| polyester | 5-10 | Particules broyées/1,9 | 28,5 | 75/25 | 22,5 | 36,5 |

| | | | | | | |
|---|---|---|---|---|---|---|
| ¹ PSE = polystyrène expansé ² PET = poly(éthylène téréphtalate) | | | | | | |

On constate que la plupart des matériaux, et en particulier ceux contenant les fibres les plus fines (diamètre équivalent 5-10 µm) et des particules de faible taille (diamètre équivalent inférieur à 2 mm) présentent des conductivités thermiques équivalentes à celles des produits à base de laine minérale. La pose de ces matelas est simple, rapide et agréable. Grâce à leur grande souplesse liée à leur nature textile, ces produits sont faciles à découper et s'adaptent facilement aux variations géométriques des espaces et interstices dans lesquels ils sont disposés. Ils sont faciles à fabriquer sur des installations existantes et les matériaux les constituant sont des polymères synthétiques de faible coût, largement disponibles sur le marché.

## Revendications

1. Matériau textile non-tissé comprenant un assemblage
- (A) de 75 à 15 parties en poids, pour 100 parties de (A) et de (B), de fibres organiques, et
- (B) de 25 à 85 parties en poids, pour 100 parties de (A) et de (B), de particules individualisées d'un matériau polymère alvéolaire,
ledit matériau ayant une masse volumique comprise entre 5 et 35 kg/m³ et une épaisseur au moins égale à 40 mm, de préférence comprise entre 40 mm et 120 mm,

2. Matériau textile non-tissé selon la revendication 1, **caractérisé par le fait que** les fibres organiques sont des fibres synthétiques ou naturelles, de préférence des libres synthétiques.

3. Matériau textile non-tissé selon la revendication 1 ou 2, **caractérisé par le fait que** les fibres organiques sont des fibres synthétiques à base de polyester, de polyamide, de polymères acryliques, de polyuréthannes, de poly(alcool vinylique), de polyoléfines, de polymères phénoliques, de polymères vinyliques halogènes, d'aramide, de poly(aryléthercétone), de poly(benzimidaxole), de poly(éther imide), de poly(sulfure de phénylène) ou d'un mélange de ceux-ci.

4. Matériau textile non-tissé selon la revendication 1 ou 2, **caractérisé par le fait que** les fibres organiques sont des fibres naturelles choisies parmi le coton, le lin, le jute, le chanvre, la soie, la laine et les poils d'animaux.

5. Matériau textile non-tissé selon l'une quelconque des revendications précédentes, **caractérisé par le fait que** les fibres sont des fibres courtes ayant une longueur comprise entre 4 mm et 100 mm, de préférence entre 10 et 40 mm.

6. Matériau textile non-tissé selon l'une quelconque des revendications précédentes, **caractérisé par le fait que** les fibres organiques présentent une finesse comprise entre 0,0025 dtex et 4,5 dtex.

7. Matériau textile non-tissé selon l'une quelconque des revendications Précédentes, **caractérisé par le fait que** les particules de matériau polymère alvéolaire sont des billes sensiblement sphériques ou des particules de forme irrégulière, de préférence des particules de forme irrégulière obtenues par broyage ou découpage de mousses synthétiques.

8. Matériau textile non-tissé selon l'une quelconque des revendications précédentes, **caractérisé par le fait que** les polymères formant les particules de matériau polymère alvéolaire sont choisis parmi les homopolymères et copolymères de polystyrène, les polyuréthannes et les polyoléfines.

9. Matériau textile non-tissé selon l'une quelconque des revendication précédentes, **caractérisé par le fait que** les particules ont un diamètre équivalent moyen, déterminé par analyse d'images optiques, compris entre 0,5 et 8 mm, de préférence entre 1 et 6 mm et en particulier entre 1,5 et 4 mm.

10. Matériau textile non-tissé selon l'une quelconque des revendications précédentes, **caractérisé par le fait que** la masse volumique apparente des particules de matériau polymère alvéolaire est inférieure à 50 kg/m³, de préférence comprise entre 10 et 35 kg/m³.

11. Matériau textile non-tissé selon l'une quelconque des revendications précédentes, **caractérisé par le fait que** le matériau polymère alvéolaire constituant les particules est un matériau comportant une majorité d'alvéoles fermées.

12. Matériau textile non-tissé selon l'une quelconque des revendications précédentes, **caractérisé par le fait qu'**il présente une masse volumique comprise entre 10 et 25 kg/m³.

13. Produit d'isolation thermique comprenant un matériau textile non-tissé selon l'une quelconque des revendications précédentes.

14. Produit d'isolation thermique selon la revendication 13, **caractérisé par le fait que** le matériau textile non-tissé est enfermé dans un sac ou sachet.

15. Produit d'isolation thermique selon le revendication 14, **caractérisé par le fait que** le sac ou sachet est constitué d'un film plastique, d'un film composite, ou d'un voile tissé, tricoté ou non-tissé.

16. Utilisation du produit d'isolation thermique selon l'une quelconque des revendications 13 à 15, pour l'isolation thermique de bâtiments, de préférence de toitures.

## Claims

1. Nonwoven textile material comprising an assembly
- (A) of 75 to 15 parts by weight, per 100 parts of (A) and (B), of organic fibres, and
- (B) of 25 to 85 parts by weight, per 100 parts of (A) and (B), of individualized particles of an alveolar polymeric material,
the said material having a mass per unit volume of between 5 and 35 kg/m³ and a thickness at least equal to 40 mm and preferably between 40 mm and 120 mm.

2. Nonwoven textile material according to Claim 1, **characterized in that** the organic fibres are synthetic or natural fibres, preferably synthetic fibres.

3. Nonwoven textile material according to Claim 1 or 2, **characterized in that** the organic fibres are synthetic fibres based on polyester, polyamide, acrylic polymers, polyurethanes, poly(vinyl alcohol), polyolefins, phenolic polymers, halogenated vinyl polymers, aramid, poly(aryl ether ketone), poly(benzimidazole), poly(ether imide) or poly(phenylene sulfide), or a mixture thereof.

4. Nonwoven textile material according to Claim 1 or 2, **characterized in that** the organic fibres are natural fibres chosen from cotton, flax, jute, hemp, silk, wool and animal hair.

5. Nonwoven textile material according to any one of the preceding claims, **characterized in that** the fibres are short fibres with a length of between 4 mm and 100 mm and preferably between 10 and 40 mm.

6. Nonwoven textile material according to any one of the preceding claims, **characterized in that** the organic fibres have a fineness of between 0.0025 dtex and 4.5 dtex.

7. Nonwoven textile material according to any one of the preceding claims, **characterized in that** the particles of alveolar polymeric material are substantially spherical beads or particles of irregular shape, preferably particles of irregular shape obtained by grinding or chopping synthetic foams.

8. Nonwoven textile material according to any one of the preceding claims, **characterized in that** the polymers forming the particles of alveolar polymeric material are chosen from polystyrene homopolymers and copolymers, polyurethanes and polyolefins.

9. Nonwoven textile material according to any one of the preceding claims, **characterized in that** the particles have a mean equivalent diameter, determined by optical image analysis, of between 0.5 and 8 mm, preferably between 1 and 6 mm and in particular between 1.5 and 4 mm.

10. Nonwoven textile material according to any one of the preceding claims, **characterized in that** the apparent mass per unit volume of the particles of alveolar polymeric material is less than 50 kg/m³ and preferably between 10 and 35 kg/m³.

11. Nonwoven textile material according to any one of the preceding claims, **characterized in that** the alveolar polymeric material constituting the particles is a material comprising a majority of closed alveoles.

12. Nonwoven textile material according to any one of the preceding claims, **characterized in that** it has a mass per unit volume of between 10 and 25 kg/m³.

13. Thermal insulation product comprising a nonwoven textile material according to any one of the preceding claims.

14. Thermal insulation product according to Claim 13, **characterized in that** the nonwoven textile material is enclosed in a bag or sachet.

15. Thermal insulation product according to Claim 14, **characterized in that** the bag or sachet consists of a plastic film, a composite film or a woven, knitted or nonwoven voile fabric.

16. Use of the thermal insulation product according to any one of Claims 13 to 15, for the thermal insulation of buildings, preferably of roofs.

## Patentansprüche

1. Ungewebtes Textilmaterial aufweisend eine Zusammenstellung
(A) von 75 bis 15 Gewichtsteilen pro 100 Teilen an (A) und an (B), organische Fasern und
(B) von 25 bis 85 Gewichtsteilen, pro 100 Teilen an (A) und an (B), einzelne Teilchen aus einem zelligen Polymermaterial,
wobei das Material eine Dichte zwischen 5 und 35 kg/m³ und eine Dicke von mindestens gleich 40 mm, bevorzugt zwischen 40 mm und 120 mm, hat.

2. Ungewebtes Textilmaterial nach Anspruch 1, **dadurch gekennzeichnet, dass** die organischen Fasern Kunstfasern oder Naturfasern, bevorzugt Kunstfasern, sind.

3. Ungewebtes Textilmaterial nach Anspruch 1 oder 2, **dadurch gekennzeichnet, dass** die organischen Fasern Kunstfasern auf der Basis von Polyester, von Polyamid, von Acrylpolymeren, von Polyurethanen, von Poly(vinylalkohol), von Polyolefinen, von Phenolpolymeren, von halogenierten Vinylpolymeren, von Aramid, von Polv(arvletherketon), von Poly(benzimidazol), von Poly(ether-imid), von Poly(phenylensulfid) oder eines Gemisches von diesen sind.

4. Ungewebtes Textilmaterial nach Anspruch 1 oder 2, **dadurch gekennzeichnet, dass** die organischen Fasern Naturfasern sind, die ausgewählt sind aus Baumwolle, Leinen, Jute, Hanf, Seide, Wolle und Tierhaaren.

5. Ungewebtes Textilmaterial nach einem der vorangehenden Ansprüche, **dadurch gekennzeichnet, dass** die Fasern kurze Fasern sind, die ein Länge zwischen 4 mm und 100 mm, bevorzugt zwischen 10 und 40 mm, haben.

6. Ungewebtes Textilmaterial nach einem der vorangehenden Ansprüche, **dadurch gekennzeichnet, dass** die organischen Fasern eine Feinheit zwischen 0,0025 dtex und 4,5 dtex aufweisen.

7. Ungewebtes Textilmaterial nach einem der vorangehenden Ansprüche, **dadurch gekennzeichnet, dass** die Teilchen aus zelligem Polymermaterial im wesentlichen sphärische Kugeln oder Teilchen von unregelmäßiger Gestalt sind, bevorzugt Teilchen von unregelmäßiger Gestalt, die durch Zerreiben oder Zerschneiden von Schaumkunststoffen erhalten wurden.

8. Ungewebtes Textilmaterial nach einem der vorangehenden Ansprüche, **dadurch gekennzeichnet, dass** die Polymere, die die Teilchen aus zelligem Polymermaterial bilden, ausgewählt sind aus den Homopolymeren und Copolymeren von Polystyrol, den Polyurethanen und den Polyolefinen.

9. Ungewebtes Textilmaterial nach einem der vorangehenden Ansprüche, **dadurch gekennzeichnet, dass** die Teilchen einen mittleren Äquivalentdurchmesser, bestimmt durch Analyse optischer Abbildungen, zwischen 0,5 und 8 mm, bevorzugt zwischen 1 und 6 mm, und insbesondere zwischen 1,5 und 4 mm, haben.

10. Ungewebtes Textilmaterial nach einem der vorangehenden Ansprüche, **dadurch gekennzeichnet, dass** die Schüttdichte der Teilchen aus zelligem Polymermaterial geringer als 50 kg/m³, bevorzugt zwischen 10 und 35 kg/m³, ist.

11. Ungewebtes Textilmaterial nach einem der vorangehenden Ansprüche, **dadurch gekennzeichnet, dass** das zellige Polymermaterial, das die Teilchen bildet, ein Material ist, das eine Mehrheit von geschlossenen Zellen aufweist.

12. Ungewebtes Textilmaterial nach einem der vorangehenden Ansprüche, **dadurch gekennzeichnet, dass** es eine Dichte zwischen 10 und 25 kg/m³ aufweist.

13. Wärmedämmkörper aufweisend ein ungewebtes Textilmaterial nach einem der vorangehenden Ansprüche.

14. Wärmedämmkörper nach Anspruch 13, **dadurch gekennzeichnet, dass** das ungewebte Textilmaterial in einem Sack oder Beutel enthalten ist.

15. Wärmedämmkörper nach Anspruch 14, **dadurch gekennzeichnet, dass** der Sack oder Beutel aus einer Kunststofffolie, aus einer Verbundfolie oder aus einem gewebten, gewirkten oder ungewebten Tuch besteht.

16. Verwendung des Wärmedämmkörpers nach einem der Ansprüche 13 bis 15 zur Wärmeisolierung von Gebäuden, bevorzugt von Dächern.
